# EUROPEAN PATENT APPLICATION

(11) **EP 4 708 481 A1**
(43) Date of publication of application: **11.03.2026**
(21) Application number: 25200382.7
(22) Date of filing: 05.09.2025
(51) Int. Cl.: H01M 50/15, H01M 50/176, H01M 50/553, H01M 50/562

(54) **CONDUCTIVE STRUCTURE, COVER PLATE ASSEMBLY, AND BATTERY CELL**

(30) Priority: 06.09.2024 CN 202422195837 U
(71) Applicant: HUIZHOU EVE POWER CO., LTD, Huizhou, Guangdong 516039 (CN); Eve Power Co., Ltd., Jingmen, Hubei 448000 (CN)
(72) Inventor: HE, Wei, Huizhou, Guangdong, 516039 (CN); ZHENG, Xu, Huizhou, Guangdong, 516039 (CN); SHU, Kuanjin, Huizhou, Guangdong, 516039 (CN); DUAN, Dong, Huizhou, Guangdong, 516039 (CN); LIU, Ziwen, Huizhou, Guangdong, 516039 (CN)
(74) Representative: Berggren Oy

(57) **Abstract**

The present disclosure provides a conductive structure (10), a cover plate assembly (100), and a battery cell (1000). The conductive structure (10) includes a first-metal post (1) and a second-metal layer (2). The first-metal post (1) includes a first end (11) and a second end (12) opposite to each other. The first end (11) is formed with a first step portion (11a). The second-metal layer (2) is bonded to a surface of the first-metal post (1). The second-metal layer (2) wraps the first end (11) and extends toward the second end (12). The second-metal layer (2) is formed with a second step portion (26) matching the first step portion (11a). The second step portion (26) is configured to be welded to a current collector (120).

## Description

### TECHNICAL FIELD

The present disclosure relates to the field of battery technologies, and in particular, to a conductive structure, a cover plate assembly, and a battery cell.

### BACKGROUND

Poles are important components for connecting inside and outside of cells (also called battery cells). Generally, one end of each pole is connected to a circuit outside the cell, e.g., connected to a module busbar through a terminal pressing block, and another end of each pole is connected to an internal circuit of the cell, e.g., connected to a tab of an electrode assembly through a current collector. At present, most of the poles are made of single metal materials, e.g., a material of a positive pole is aluminum material, and a material of a negative pole is copper material. However, the poles made of the single metal materials are likely to bring problems with welding difficulties. Taking the negative pole being a pure copper pole as an example, when the pure copper pole and the terminal pressing block are welded by laser, in order to reduce costs and a weight of the cell, a material of the terminal pressing block is generally aluminum material. Since melting points of copper and aluminum are different, laser welding is easy to fail, resulting in cracking.

In order to reduce the welding difficulties, a composite pole is designed in the related art. The composite pole includes two second-metal layers arranged up and down and made of different materials. Different second-metal layers are bonded together by friction welding or stamping. Taking the composite pole being the negative pole as an example, the composite pole includes an aluminum layer and a copper layer. On one hand, an end portion of the copper layer in the composite pole is provided with a step to fit and weld with the current collector. In order to ensure a welding effect, a surface area of the step should not be too small, and a thickness of the copper layer should not be too thin. On the other hand, in order to ensure a bonding force between the aluminum layer and the copper layer, a diameter of the composite pole should not be too small either. The above-mentioned two aspects make it difficult to reduce the costs of the composite pole.

### SUMMARY

Embodiments of the present disclosure provide a conductive structure, a cover plate assembly, and a battery cell, so as to solve a technical problem of high costs of a composite pole.

In a first aspect, the embodiments of the present disclosure provide a conductive structure, including:
a first-metal post includes a first end and a second end opposite to each other, where the first end is formed with a first step portion; and
a second-metal layer bonded to a surface of the first-metal post, where the second-metal layer wraps the first end and extends toward the second end, the second-metal layer is formed with a second step portion matching the first step portion, and the second step portion is configured to be welded to a current collector.

In an embodiment, the second step portion includes a first step surface and a second step surface connected to each other. A width of the first step surface is greater than or equal to 0.5 mm in a radial direction of the first-metal post. A height of the second step surface is greater than or equal to 0.4 mm in an axial direction of the first-metal post.

In an embodiment, the first-metal post radially protrudes to form a boss, a radial dimension of the boss is greater than a radial dimension of the first step portion, and the second-metal layer extends onto the boss.

In an embodiment, an end portion of the second-metal layer extends to a side of the boss close to the first end and is embedded in the boss.

In an embodiment, an end portion of the second-metal layer extends to a side of the boss away from the first end.

In an embodiment, the conductive structure is a pole and a terminal pressing block integrally arranged, and the boss is the terminal pressing block.

In an embodiment, the first step portion is a sinking table located at an edge of an end surface of the first end. The second-metal layer further includes a first section and a second section. The first section corresponds to the end surface of the first end. The second section corresponds to a side surface of the first-metal post. The second step portion is connected between the first section and the second section.

In an embodiment, the end surface of the first end is partially recessed inward to form a groove. The first section includes a first sub-section, a second sub-section, and a third sub-section connected in sequence. The first sub-section is located outside the groove. The second sub-section is located on a side wall of the groove. The third sub-section is located on a bottom wall of the groove.

In an embodiment, a vertical distance from an outer surface of the first sub-section to an outer surface of the third sub-section is less than or equal to 2.5 mm, and/or an average thickness of the first sub-section is greater than or equal to 0.5 mm, and/or an average thickness of the second section is greater than or equal to 0.5 mm.

In an embodiment, the second sub-section obliquely extends from the first sub-section to the third sub-section, and an inclined angle of the second sub-section ranges from 15° to 60°.

In an embodiment, a bonding interface between the second-metal layer and the first-metal post is a concave-convex fitting interface, and/or a diameter of the conductive structure is less than or equal to 10 mm.

In an embodiment, an average thickness of the second-metal layer is less than or equal to 3 mm.

In an embodiment, an end portion of the second-metal layer is embedded in the first-metal post.

In a second aspect, the embodiments of the present disclosure further provide a cover plate assembly, including:
a cover plate;
the aforementioned conductive structure passing through the cover plate; and
the current collector located on a side of the cover plate and welded to the second step portion.

In an embodiment, the cover plate includes:
a cover plate body,
a first insulating member disposed between the conductive structure and the cover plate body;
a second insulating member disposed between the cover plate body and the current collector; and/or
a sealing member disposed between the cover plate and the conductive structure.

According to a third aspect, the embodiments of the present disclosure further provide a battery cell, including:
a casing including an accommodating cavity;
an electrode assembly disposed in the accommodating cavity, where the electrode assembly includes a tab; and
the aforementioned cover plate assembly, where the cover plate assembly is connected to the casing and closes an opening of the accommodating cavity, and the current collector is connected to the tab.

Beneficial effects of the embodiments of the present disclosure are as follows.

In the conductive structure of the embodiments of the present disclosure, compared with the existing art, In a case where a same bonding area between the second-metal layer and the first-metal post and a same welding strength between the conductive structure and the current collector are realized, a diameter of the conductive structure may be smaller and a thickness of the second-metal layer may be thinner, thereby reducing costs.

### BRIEF DESCRIPTION OF THE DRAWINGS

In order to provide clearer explanations of the technical solutions in the embodiments of the present disclosure, it is to be noted that the accompanying drawings in the following description of the embodiments are merely some of embodiments of the present disclosure, and that other accompanying drawings may be obtained by the skilled person in the art without involving creative labor.
FIG. 1 is a schematic cross-sectional structural view of a conductive structure according to the embodiments of the present disclosure.
FIG. 2 is an enlarged view of a portion D in FIG. 1.
FIG. 3 is a schematic three-dimensional structural view of another conductive structure at a viewing angle according to the embodiments of the present disclosure.
FIG. 4 is a schematic three-dimensional structural view of another conductive structure at another viewing angle according to the embodiments of the present disclosure.
FIG. 5 is a schematic cross-sectional structural view of another conductive structure according to the embodiments of the present disclosure.
FIG. 6 is an enlarged view of a portion G in FIG. 5.
FIG. 7 is a schematic exploded structural view of a cover plate assembly according to the embodiments of the present disclosure.
FIG. 8 is a schematic cross-sectional structural view of a battery cell according to the embodiments of the present disclosure.

Reference numerals are as follows:
10, conductive structure; 101, pole; 102, terminal pressing block;
1, first-metal post;
11, first end; 11a, first step portion; 11b, groove;
12, second end;
13, boss;
2, second-metal layer;
20, end portion;
21, first section; 211, first sub-section; 212, second sub-section; 213, third sub-section;
22, second section;
23, third section;
24, fourth section;
25, fifth section; 251, reverse fastening layer;
26, second step portion; 261, first step surface; 262, second step surface;
100, cover plate assembly;
110, cover plate; 111, cover plate body; 112, first insulating member; 113, second insulating member; 114, mounting hole; 115, liquid injection hole;
120, current collector;
130, sealing member;
140, explosion-proof valve;
1000, battery cell;
1100, casing; 1110, accommodating cavity;
1200, electrode assembly; 1210, tab.

### DETAILED DESCRIPTION

The technical solutions in the embodiments of the present disclosure will be described clearly and completely hereafter with reference to accompanying drawings of the embodiments of the present disclosure. Apparently, the described embodiments are only a part of but not all embodiments of the present disclosure. Based on the embodiments of the present disclosure, all other embodiments obtained by those skilled in the art without involving any creative labor are within the scope of the present disclosure.

Furthermore, it should be understood that the specific embodiments described herein are only for illustrating and explaining the present disclosure and are not intended to limit the present disclosure. In the present disclosure, unless otherwise specified, the directional words used such as "upper" and "lower" usually refer to the upper and lower position of the device in actual use or working state, specifically to the direction of the drawing in the drawings, while "inside" and "outside" are understood referring to the contour lines of the device.

The terms "first" and "second" are only used for descriptive purposes, and cannot be interpreted as indicating or implying the relative importance or implicitly indicating the quantity of indicated technical features. Thus, features defined by first and second may explicitly or implicitly include one or more of the features. In the description of the present disclosure, multiple means two or more, unless otherwise specifically defined.

In the description of the present disclosure, it should be understood that, unless specified or limited otherwise, the terms "connected", "coupled", and "fixed" are used broadly, and may be, for example, fixed connections, detachable connections, or integrated connections; may be mechanical connections, may also be electrical connections or communicate with each other; may also be direct connections or indirect connections via intervening structures; may also be inner communications of two elements or interaction relationships between two elements, may also be direct connections or indirect connections via intervening structures; may also be inner communications of two elements or interaction relationships between two elements. Those ordinary skilled in the art can understand the specific meanings of the above terms in the present disclosure according to specific situations.

The terms "include", "comprise", or any other variation thereof are intended to cover a non-exclusive inclusion, such that a process, method, article, or device that includes a list of elements includes not only those elements but also other elements not expressly listed, or elements inherent to such a process, method, article, or device. An element proceeded by "comprises a..." does not, without more constraints, preclude the existence of additional identical elements in the process, method, article, or device that comprises the element.

In the descriptions of the embodiments of the present disclosure, words such as "example" or "for example" are used to indicate examples, descriptions, or descriptions. Any embodiment or design scheme described as an "example" or "for example" in the embodiments of the present disclosure is not explained as being more preferred or having more advantages than another embodiment or design scheme. The use of words such as "example" or "e.g." is intended to present a relative concept in a clear manner.

For ease of understanding the solutions of the present disclosure, spline curves and arrows that are used as labels in the accompanying drawings are described herein: a component indicated by a spline curve without an arrow is a solid component, that is, a component with a solid structure; and a component indicated by a spline curve with an arrow is a phantom component, that is, a component without a solid structure.

Embodiments of the present disclosure provide a conductive structure, a cover plate assembly, and a battery cell.

According to a first aspect, the embodiments of the present disclosure provide a conductive structure. The conductive structure is configured to connect an internal circuit of a battery cell to a circuit (an external circuit for short) outside the battery cell, so that the battery cell is connected to the external circuit to implement that the external circuit supplies power to the battery cell (i.e., the battery cell is charged), or the battery cell supplies power to the external circuit (i.e., the battery cell is discharged). In detail, the conductive structure may be used to be assembled to a cover plate of the battery cell.

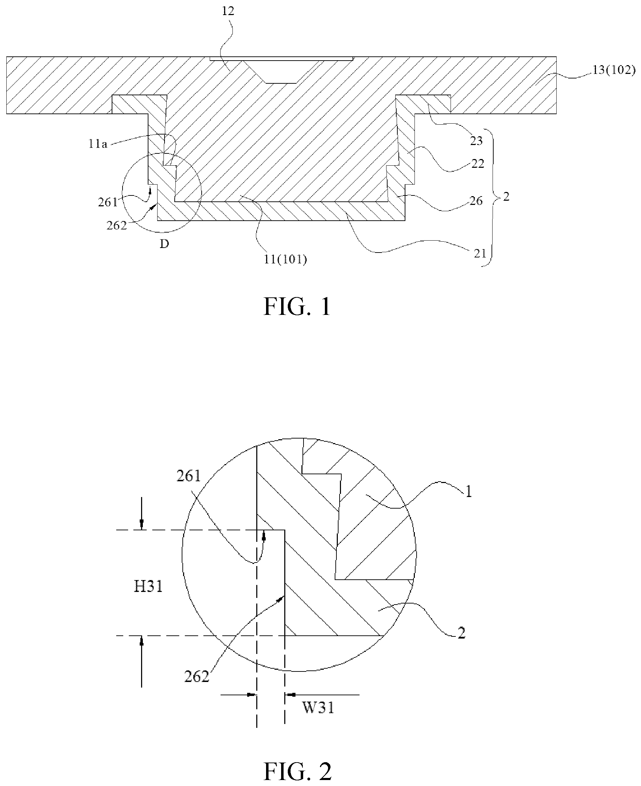

Specifically, referring to FIG. 1 to FIG. 8, the conductive structure 10 includes a first-metal post 1 and a second-metal layer 2. The second-metal layer 2 is bonded to a surface of the first-metal post 1. Specifically, the first-metal post 1 includes two opposite ends, namely a first end 11 and a second end 12. The second-metal layer 2 wraps the first end 11 and extends toward the second end 12.

The conductive structure 10 includes the first-metal post 1 and the second-metal layer 2. It may be understood that the first-metal post 1 is a pillar structure, and a material of the first-metal post 1 includes a first metal. The second-metal layer 2 is a layered structure, and a material of the second-metal layer 2 includes a second metal. Herein, the second metal and the first metal are different metals.

The second-metal layer 2 and the surface of the first-metal post 1 are bonded together, which means that the second-metal layer 2 is located on an outer surface of the first-metal post 1, and the second-metal layer 2 is further bonded to the first-metal post 1. The "bond" herein means that the second-metal layer 2 and the first-metal post 1 are not separated simply under the action of gravity. For example, the second-metal layer 2 and the first-metal post 1 are physically bonded together. As an example, the second-metal layer 2 and the first-metal post 1 may be bonded together by cold heading.

It may be understood that the second-metal layer 2 wraps a surface of the first end 11, and the second-metal layer 2 extends from the surface of the first end 11 to the second end 12. The second-metal layer 2 extends from the first end 11 to the second end 12. Specifically, an end portion 20 of the second-metal layer 2 extends to the second end 12. The end portion 20 of the second-metal layer 2 may extend to the second end 12, or the end portion 20 of the second-metal layer 2 may extend to a position between the first end 11 and the second end 12. Optionally, the end portion 20 of the second-metal layer 2 extends to the second end 12, but the second-metal layer 2 does not completely wrap the second end 12. That is, the second end 12 is at least partially exposed outside the second-metal layer 2. Herein, the end portion 20 of the second-metal layer 2 refers to a portion at an edge of the second-metal layer 2.

The second-metal layer 2 extends from the first end 11 to the second end 12 of the first-metal post 1. Compared with a form in which the second-metal layer 2 is disposed only on an end surface of one end of the first-metal post 1, under a same diameter, a bonding area between the second-metal layer 2 and the first-metal post 1 may be effectively increased, so as to ensure the overcurrent capability of the conductive structure 10 and reduce a risk of falling off of the second-metal layer 2. In other words, under a same bonding area, the above-mentioned solutions may make a diameter of the conductive structure 10 smaller, thereby reducing costs of the conductive structure 10.

In a case where the conductive structure 10 is applied to the battery cell 1000, the first end 11 of the first-metal post 1 faces an inside of the battery cell 1000, and the second end 12 faces an outside of the battery cell 1000. The second-metal layer 2 wraps the first end 11 of the first-metal post 1 and extends from the first end 11 to the second end 12, so that the second-metal layer 2 may also serve as a protective layer to separate the first end 11 of the first-metal post 1 from an electrolyte in the battery cell 1000, thereby reducing the risk of the first end 11 being corroded by the electrolyte.

The first end 11 of the first-metal post 1 is further formed with a first step portion 11a. The second-metal layer 2 covers the surface of the first end 11. The second-metal layer 2 is formed with a second step portion 26 matching the first step portion 11a. The second step portion 26 is used to be welded to a current collector 120. When the conductive structure 10 is welded to the current collector 120, the current collector 120 may be sleeved on the conductive structure 10, the current collector 120 fits with the second step portion 26. The current collector 120 is welded to the second step portion 26 by laser welding. If a surface area of the second step portion 26 is larger, a surface of the second step portion 26 welded with the current collector 120 is larger. The larger the welding surface is, the higher the reliability of welding is.

It may be foreseen that one end of the conductive structure 10 also has a step, and the step is formed by stacking the second step portion 26 on the first step portion 11a, i.e., the first-metal post 1 and the second-metal layer 2 are synchronously recessed inward. Advantages of this arrangement are that a strong correlation between an area of the second step portion 26 and a thickness of the second-metal layer 2 is changed. Even if the thickness of the second-metal layer 2 is relatively small, a sufficiently large second step portion 26 may be formed to ensure the effect of welding the second step portion 26 and the current collector 120.

In addition, this manner may also effectively reduce the risk of cracking of the second-metal layer 2, and the second step portion 26 may also effectively block laser penetration during a laser welding process.

In other words, compared with the form in which the second-metal layer 2 is disposed only on the end surface of one end of the first-metal post 1, in the conductive structure 10 provided by the embodiments of the present disclosure, In a case where a same bonding area between the second-metal layer 2 and the first-metal post 1 and a same welding strength between the conductive structure 10 and the current collector 120 are realized, the diameter of the conductive structure 10 may be smaller and the thickness of the second-metal layer 2 may be thinner, thereby reducing the costs.

In some embodiments, an average thickness D1 of the second-metal layer 2 is less than or equal to 3 mm. By thinning the second-metal layer 2, the costs of manufacturing the conductive structure 10 may be effectively reduced. As an example, the average thickness D1 of the second-metal layer 2 is 0.4 mm, 0.5 mm, 0.6 mm, 0.8 mm, 1.0 mm, 1.2 mm, 1.5 mm, 1.8 mm, 2.0 mm, 2.2 mm, 2.5 mm, 2.8 mm, or 3.0 mm. Optionally, the average thickness D1 of the second-metal layer 2 is less than or equal to 1.8 mm.

In some embodiments, the diameter R of the conductive structure 10 is less than or equal to 10 mm. By making the conductive structure 10 small, the costs of manufacturing the conductive structure 10 may be effectively reduced. As an example, the diameter R of the conductive structure 10 is 7 mm, 8 mm, 9 mm, or 10 mm.

In some embodiments, a bonding interface between the second-metal layer 2 and the first-metal post 1 is a concave-convex fitting interface. The concave-convex fitting surface herein refers to a surface of the second-metal layer 2 and a surface of the first-metal post 1 that are microscopically concave-convex fitted. Optionally, the conductive structure 10 is a cold heading molded member. As an example, the first-metal post 1 is an aluminum pillar, the second-metal layer 2 is a copper layer, and the conductive structure 10 is formed from a copper-aluminum composite plate by cold heading processing. Due to the ductility of metal, during the cold heading process, under the action of pressure, the first metal in the first-metal post 1 and the second metal in the second-metal layer 2 deform and invade each other, so that the bonding interface between the first-metal post 1 and the second-metal layer 2 is formed into a micro-uneven wavy surface, thereby increasing the bonding area between the first-metal post 1 and the second-metal layer 2 and improve the bonding strength.

In some embodiments, referring to FIGs. 1, 2, and 6, the second step portion 26 includes a first step surface 261 and a second step surface 262 connected to each other. Specifically, the second step portion 26 is L-shaped. The first step surface 261 is a surface of the second step portion 26 extending along a first direction. The second step surface 262 is a surface of the second step portion 26 extending along a second direction. The first direction intersects with the second direction. Optionally, the first direction is perpendicular to the second direction. As an example, the first direction is a radial direction of the first-metal post 1, and the second direction is an axial direction of the first-metal post 1. In the radial direction of the first-metal post 1, a width W31 of the first step surface 261 is greater than or equal to 0.5 mm. As an example, the width W31 of the first step surface 261 is 0.5 mm, 0.6 mm, 0.7 mm, 0.8 mm, 0.9 mm, or 1.0 mm. In the axial direction of the first-metal post 1, a height H31 of the second step surface 262 is greater than or equal to 0.4 mm. As an example, the height H31 of the second step surface 262 is 0.4 mm, 0.5 mm, 0.6 mm, 0.7 mm, 0.8 mm, 0.9 mm, or 1.0 mm. By increasing the width of the first step surface 261 and the height of the second step surface 262, it may be ensured that the second step portion 26 has a sufficient contact surface when fitting with the current collector 120, thereby improving the welding effect and the overcurrent capability.

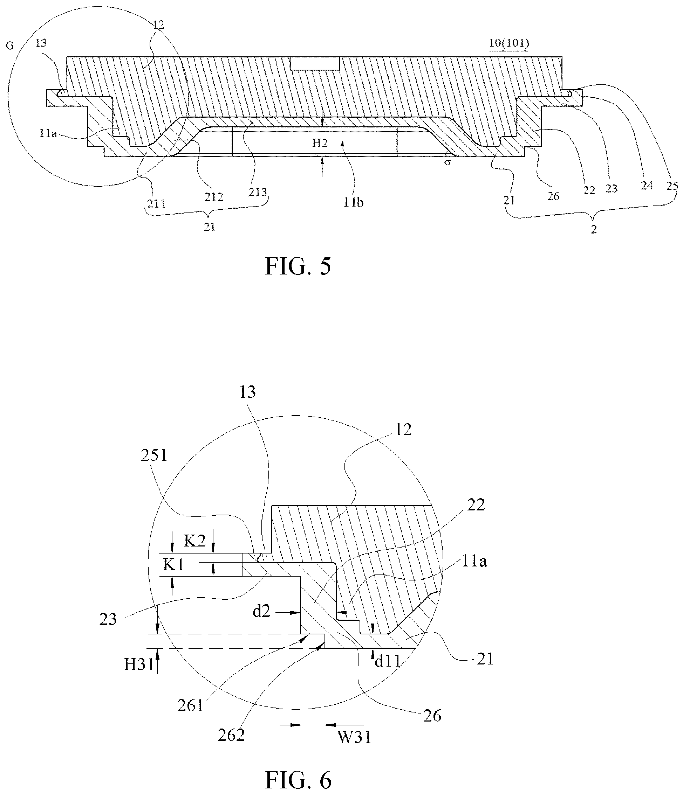

In some embodiments, referring to FIG. 1 and FIG. 5, the first-metal post 1 is radially protruded to form a boss 13. A radial dimension of the boss 13 is greater than a radial dimension of the first step portion 11a. The second-metal layer 2 extends onto the boss 13. Specifically, a part of the first-metal post 1 protrudes outward substantially along the radial direction of the first-metal post 1 to form the boss 13. As an example, an angular deviation between the boss 13 and the radial direction of the first-metal post 1 is within ±15°. The boss 13 is formed on the first-metal post 1, and the radial dimension of the boss 13 is greater than the radial dimension of the first step portion 11a. In this way, when the conductive structure 10 is applied to a battery cell 1000, the boss 13 may serve as a stop structure to be in stop fit with other components (e.g., a cover plate 110). Furthermore, the second-metal layer 2 extends onto the boss 13, so that the second-metal layer 2 is clamped between the boss 13 and the components in stopping fit with the boss 13. The bonding surface between the second-metal layer 2 and the first-metal post 1 is increased, thereby reducing the risk that the second-metal layer 2 is separated from the first-metal post 1. As an example, the boss 13 is formed on the second end 12, or the boss 13 is located between the second end 12 and the first end 11.

In some embodiments, referring to FIG. 1, the end portion 20 of the second-metal layer 2 is embedded in the first-metal post 1. As an example, the end portion 20 of the second-metal layer 2 extends to a side of the boss 13 close to the first end 11. The end portion 20 of the second-metal layer 2 is embedded in the boss 13. Since the bonding between the end portion 20 of the second-metal layer 2 and the first-metal post 1 is generally easy to form a weak point, by embedding the end portion 20 of the second-metal layer 2 in the first-metal post 1, the bonding area between the end portion 20 of the second-metal layer 2 and the first-metal post 1 is increased, and the bonding strength is improved. In addition, the end portion 20 of the second-metal layer 2 is hidden inside the first-metal post 1, so as to reduce the risk of the end portion 20 of the second-metal layer 2 being scratched by external forces, thereby reducing the risk of the second-metal layer 2 peeling off. Of course, in some embodiments, the end portion of the second-metal layer 2 may also be embedded in a portion of the first-metal post 1 located on a side of the boss 13 away from the first end 11.

In some embodiments, referring to FIG. 5, the end portion 20 of the second-metal layer 2 extends to the side of the boss 13 away from the first end 11. Since the end portion 20 of the second-metal layer 2 extends from the first end 11 of the first-metal post 1 to the second end 12, the end portion 20 of the second-metal layer 2 extends to the side of the boss 13 away from the first end 11. In this way, the second-metal layer 2 may wrap most or even all surfaces of the boss 13, so as to further increase the bonding area between the second-metal layer 2 and the first-metal post 1, improve the overcurrent capability of the conductive structure 10, improve the bonding strength between the second-metal layer 2 and the first-metal post 1, and reduce a risk that the second-metal layer 2 detaching from the first-metal post 1.

In some embodiments, referring to FIG. 5, the conductive structure 10 is a pole 101. The pole 101 is used as an electrically conductive member for connecting with the electrode assembly 1200 in the battery cell 1000. A part of the pole 101 is generally located inside the battery cell 1000, and a part of the pole 101 is located outside the battery cell 1000. As an example, the pole 101 is connected to a tab 1210 of an electrode assembly 1200. The pole 101 may be directly connected to the tab 1210, or may be connected to the tab 1210 through other components (e.g., the current collector 120). Optionally, the pole 101 includes a negative pole.

In some embodiments, referring to FIG. 1, the conductive structure 10 is an integrated structure of pole-terminal pressing block, i.e., the conductive structure 10 is the pole 101 and the terminal pressing block 102 integrally arranged. The boss 13 is a terminal pressing block 102. By integrally arranging the pole 101 and the terminal pressing block 102, a process of assembling the pole 101 and the terminal pressing block 102 may be omitted, and the costs of manufacturing the battery cell 1000 are reduced. In addition, since the second-metal layer 2 extends onto the boss 13, i.e., the second-metal layer 2 extends onto the terminal pressing block 102, a volume of the pole 101 does not need to be increased, and the bonding area of the second-metal layer 2 may be greatly increased only by reusing the terminal pressing block 102, thereby reducing the risk of falling off of the second-metal layer 2, improving the overcurrent capability of the conductive structure 10, and not bringing the burden of volume and weight. The above-mentioned terminal pressing block 102 is also a component in the battery cell 1000, and the terminal pressing block 102 is generally located outside the battery cell 1000. That is, when the integrated structure of pole-terminal pressing block is assembled on the battery cell 1000, e.g., the cover plate 110 of the battery cell 1000, the boss 13 is located outside the battery cell 1000. The terminal pressing block 102 is further configured to be electrically connected to an external structure, e.g., the terminal pressing block 102 is connected to a module busbar.

In some embodiments, referring to FIG. 1 to FIG. 6, the first step portion 11a is a sinking table located at an edge of an end surface of the first end 11. Specifically, the sinking table is formed by sinking the edge of the end surface of the first end 11 along a direction close to the second end 12. The second-metal layer 2 further includes a first section 21 and a second section 22. The first section 21 corresponds to the end surface of the first end 11. The second section 22 corresponds to a side surface of the first-metal post 1. The second step portion 26 is connected between the first section 21 and the second section 22. That is, the second-metal layer 2 includes the first section 21, the second step portion 26, and the second section 22 connected in sequence. The first section 21, the second step portion 26, and the second section 22 form a continuous film layer wrapped on an outer surface of the first end 11, so as to effectively protect the first end 11 and reduce corrosion of the electrolyte on the first end 11.

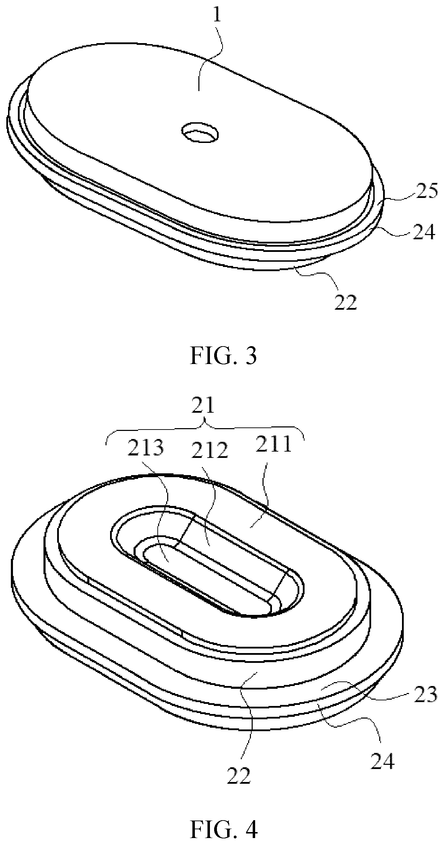

In some embodiments, referring to FIG. 3 to FIG. 6, the second-metal layer 2 further includes a third section 23. The third section 23 corresponds to a surface of the boss 13 on a side close to the first end 11. The second section 22 is connected to the first section 21 and the third section 23.

In some embodiments, referring to FIG. 3 to FIG. 6, the second-metal layer 2 further includes a fourth section 24. The fourth section 24 corresponds to a side surface of the boss 13. The fourth section 24 is connected to the third section 23.

In some embodiments, referring to FIG. 3 to FIG. 6, the second-metal layer 2 further includes a fifth section 25. The fifth section 25 corresponds to a surface of the boss 13 on a side away from the first end 11. The fourth section 24 is connected to the fifth section 25 and the third section 23.

In some embodiments, referring to FIG. 6, the fourth section 24 and the fifth section 25 form a reverse fastening layer 251 wrapping a top end of the boss 13. Along the axial direction of the first-metal post 1, a distance from an outer surface of the third section 23 and an outer surface of the reverse fastening layer 251 is defined as K1, and a thickness of the reverse fastening layer 251 is defined as K2, where f=K2/K1, and f ranges from 0.3 to1.

In some embodiments, referring to FIGS. 3 to 6, the end surface of the first end 11 is partially recessed inward to form a groove 11b. The "recessed inward" herein means that the end surface of the first end 11 is recessed toward inside the first-metal post 1. The first section 21 includes a first sub-section 211, a second sub-section 212, and a third sub-section 213 connected in sequence. The first sub-section 211 is located outside the groove 11b. The second sub-section 212 is located on a side wall of the groove 11b. The third sub-section 213 is located on a bottom wall of the groove 11b. That is, the second-metal layer 2 also matches a surface deformation of the first end 11 to form the second sub-section 212 and the third sub-section 213 attached to a surface of an inner wall of the groove 11b. The groove 11b is disposed on the end surface of the first end 11, and the second-metal layer 2 is attached to the surface of the inner wall of the groove 11b, so as to increase the bonding area between the second-metal layer 2 and the first-metal post 1 and improve the bonding strength. In addition, when the bonding interface between the first-metal post 1 and the second-metal layer 2 is formed into the micro-uneven wavy surface, the arrangement of the groove 11b may promote the first metal in the first end 11 to flow to the first step portion 11a, and compensate for the micro-uneven wavy surface, so that a surface of the second step portion 26 becomes relatively flat. In this way, when the second step portion 26 is welded with the current collector 120, a consistency difference of welding caused by the presence of a wave crest and wave trough at a large distance on the surface of the second step portion 26 is reduced.

In some embodiments, referring to FIG. 6, an average thickness d2 of the second section 22 is greater than or equal to 0.5 mm. The second step portion 26 serves as a welding portion to be welded to the current collector 120, and the second section 22 serves as a portion directly connected to the second step portion 26. It needs to ensure that the second section 22 has sufficient mechanical strength to prevent the second section 22 from being pulled through, causing the electrolyte to corrode the first-metal post 1. Generally, the greater the average thickness of the second section 22, the stronger the mechanical strength of the second section 22. Herein, the thickness of the second section 22 is a dimension of the second section 22 in the radial direction of the first-metal post 1. As an example, the average thickness d2 of the second section 22 is 0.5 mm, 0.6 mm, 0.8 mm, 1.0 mm, 1.2 mm, 1.5 mm, 1.6 mm, 1.8 mm, 2.0 mm, 2.2 mm, 2.4 mm, or 2.5 mm.

In some embodiments, referring to FIG. 6, the average thickness d11 of the first sub-section 211 is greater than or equal to 0.5 mm. The second step portion 26 serves as a welding portion to be welded to the current collector 120, and the first sub-section 211 serves as a portion directly connected to the second step portion 26, which needs to ensure that the first sub-section 211 has sufficient mechanical strength to prevent the first sub-section 211 from being broken, causing the electrolyte to corrode the first-metal post 1. Generally, the greater the average thickness of the first sub-section 211, the stronger the mechanical strength of the first sub-section 211. Herein, the thickness of the first sub-section 211 is a dimension of the first sub-section 211 in the axial direction of the first-metal post 1. As an example, the average thickness d11 of the first sub-section 211 is 0.5 mm, 0.6 mm, 0.8 mm, 1.0 mm, 1.2 mm, 1.5 mm, 1.6 mm, 1.8 mm, 2.0 mm, 2.2 mm, 2.4 mm, or 2.5 mm.

In some embodiments, referring to FIG. 5, a vertical distance H2 from the outer surface of the first sub-section 211 to the outer surface of the third sub-section 213 is less than or equal to 2.5 mm. As an example, H2 is 0.2 mm, 0.5 mm, 0.8 mm, 1.0 mm, 1.2 mm, 1.5 mm, 1.6 mm, 1.8 mm, 2.0 mm, 2.2 mm, 2.4 mm, or 2.5 mm. The vertical distance H2 from the outer surface of the first sub-section 211 to the outer surface of the third sub-section 213 being within the above-mentioned range may ensure that the first-metal post 1 and the second-metal layer 2 have better bonding strength and the difficulty of manufacturing the conductive structure 10 is low.

In some embodiments, referring to FIG. 5, the second sub-section 212 obliquely extends from the first sub-section 211 to the third sub-section 213. An inclined angle σ of the second sub-section 212 satisfies the following condition: 15°≤ σ ≤60°. Herein, the inclined angle σ refers to an inclined angle of the second sub-section 212 relative to a plane extending along the radial direction of the first-metal post 1. As an example, the inclined angle σ is 15°, 20°, 25°, 30°, 35°, 40°, 45°, 50°, 55° or 60°. By controlling the inclined angle σ of the second sub-section 212, the second sub-section 212 may smoothly transition from the first sub-section 211 to the third sub-section 213, thereby alleviating the phenomenon that the stress concentration at the connection between the second sub-section 212 and the first sub-section 211 and the connection between the second sub-section 212 and the third sub-section 213, resulting in cracking of the second-metal layer 2.

According to a second aspect, the embodiments of the present disclosure further provide a cover plate assembly 100. The cover plate assembly 100 is configured to match with a casing 1100 of a battery cell 1000 to form an enclosed accommodating cavity. The accommodating cavity is configured to accommodate the electrode assembly 1200 of the battery cell 1000.

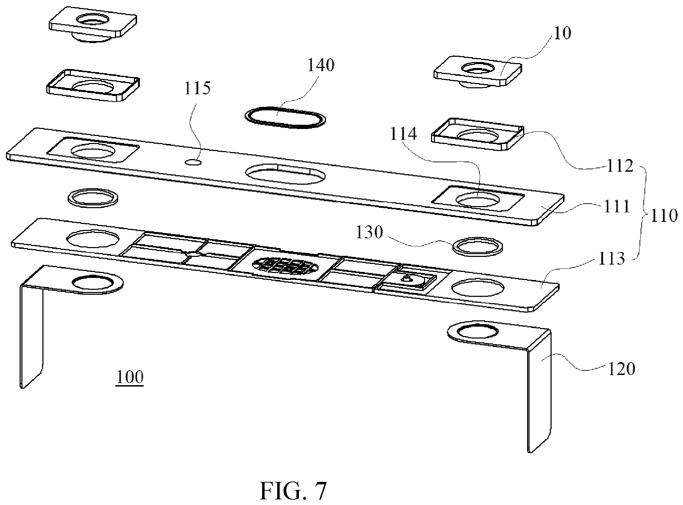

Specifically, referring to FIG. 7, the cover plate assembly 100 includes a cover plate 110 and the aforementioned conductive structure 10. The conductive structure 10 is connected to the cover plate 110. Specifically, the conductive structure 10 passes through the cover plate 110.

In detail, along a thickness direction of the cover plate 110, the cover plate 110 includes a first surface and a second surface opposite to each other. When the cover plate assembly 100 is mounted on the casing 1100 of the battery cell 1000, the first surface is a surface of the cover plate assembly 100 on a side away from the casing 1100, and the second surface is a surface of the cover plate assembly 100 on a side close to the casing 1100. Along the thickness direction of the cover plate 110, a mounting hole penetrates through the cover plate 110 is provided. The conductive structure 10 passes through the cover plate 110 through the mounting hole.

Specifically, the cover plate assembly 100 further includes a current collector 120. The current collector 120 is a conductive component in the battery cell 1000 for connecting to a tab 1210 of the electrode assembly 1200. The current collector 120 is located on one side of the cover plate 110. Specifically, the current collector 120 is located on the second surface of the cover plate 110. The current collector 120 is welded to the conductive structure 10. Specifically, the current collector 120 is welded to the second step portion 26 on the second-metal layer 2. Optionally, a material of the current collector 120 is the same as a material of the second-metal layer 2, i.e., the material of the current collector 120 is the second metal, which can reduce the difficulty of welding the current collector 120 with the second step portion 26 and improve the reliability of welding.

In some embodiments, the current collector 120 includes at least one of a current collecting plate and a connecting sheet.

In some embodiments, the current collector 120 includes a current collector body and the connecting sheet. The current collector body is connected to the connecting sheet. The current collector body is configured to be connected to the tab 1210 of the electrode assembly 1200. The connecting sheet is welded to the second step portion 26.

In some embodiments, the cover plate 110 includes a cover plate body 111, a first insulating member 112, and a second insulating member 113. The first insulating member 112 and the second insulating member 113 are arranged on two opposite sides of the cover plate body 111, respectively. More specifically, the first insulating member 112 is disposed between the conductive structure 10 (e.g., the boss 13) and the cover plate body 111. The second insulating member 113 is disposed between the cover plate body 111 and the current collector 120. The cover plate 110 is provided with a mounting hole 114. The mounting hole 114 penetrates through the cover plate body 111, the first insulating member 112, and the second insulating member 113. As an example, the cover plate body 111 is a smooth aluminum sheet. The first insulating member 112 and the second insulating member 113 are both plastic members.

In some embodiments, the cover plate assembly 100 further includes a sealing member 130. The sealing member 130 is disposed between the cover plate 110 and the conductive structure 10 to seal a gap between the conductive structure 10 and the mounting hole, so as to prevent the electrolyte from leaking from the gap. As an example, the sealing member 130 is located between the cover plate body 111 and the second insulating member 113.

In some embodiments, the processes of assembly the cover plate assembly 100 include following steps: aligning and stacking the second insulating member 113, the sealing member 130, the cover plate body 111, and the first insulating member 112 in sequence from bottom to top, passing the conductive structure 10 through the mounting hole 114 from top to bottom, abutting a larger end (e.g., the boss 13) on the conductive structure 10 on the first insulating member 112, mounting the current collector 120 on a side of the second insulating member 113 away from the sealing member 130, and welding the current collector 120 and the second step portion 26 on the conductive structure 10 together by laser welding.

In some embodiments, the cover plate assembly 100 further includes an explosion-proof valve 140. The explosion-proof valve 140 is disposed on the cover plate 110.

In some embodiments, the cover plate 110 is further provided with a liquid injection hole 115 and a sealing structure (not shown in the figures) for sealing the liquid injection hole.

According to a third aspect, the embodiments of the present disclosure further provide a battery cell 1000. The battery cell 1000 is also referred to as a cell. The battery cell 1000 is a basic unit for implementing conversion between chemical energy and electrical energy.

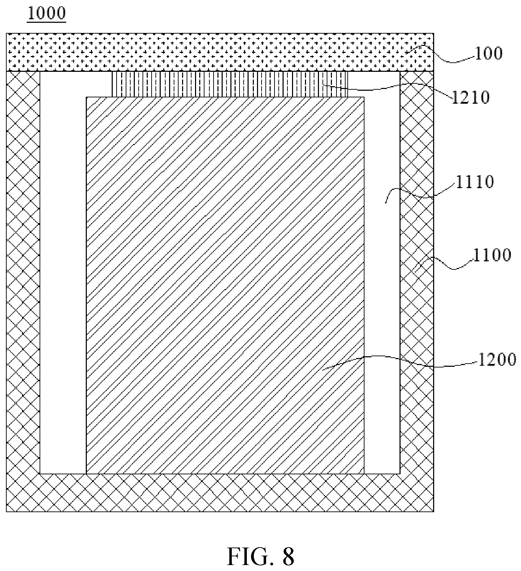

Specifically, referring to FIG. 8, the battery cell 1000 includes a casing 1100, an electrode assembly 1200, and the aforementioned cover plate assembly 100. Specifically, the casing 1100 includes an accommodating cavity 1110. The electrode assembly 1200 is disposed in the accommodating cavity 1110. The cover plate assembly 100 is connected to the casing 1100 and closes an opening of the accommodating cavity 1110. The electrode assembly 1200 includes a tab 1210. The conductive structure 10 is connected to the tab 1210.

Specifically, the electrode assembly 1200 further includes electrode plates and a separator. The tab 1210 is connected to the electrode plates. The electrode plates include a positive electrode plate and a negative electrode plate. The separator is located between the positive electrode plate and the negative electrode plate. It may be understood that the tab 1210 also includes a positive tab and a negative tab. The positive tab is connected to the positive electrode plate. The negative tab is connected to the negative electrode plate.

In addition, the battery cell 1000 further includes an electrolyte. The electrolyte is located in the accommodating cavity 1110. The electrode assembly 1200 is immersed in the electrolyte.

The embodiments of the present disclosure have been described in detail above, and the principles and embodiments of the present disclosure have been described herein by applying specific examples, and the description of the above embodiments is only for helping to understand the technical solutions of the present disclosure and the core ideas thereof. In addition, for those skilled in the art, there will be changes in the specific implementations and the scope of application based on the ideas of the present disclosure. In summary, the content of the description should not be understood as limiting the present disclosure.

## Claims

1. A conductive structure (10), **characterized in that** the conductive structure (10) comprises:
a first-metal post (1) comprising a first end (11) and a second end (12) opposite to each other, wherein the first end (11) is formed with a first step portion (11a); and
a second-metal layer (2) bonded to a surface of the first-metal post (1), wherein the second-metal layer (2) wraps the first end (11) and extends toward the second end (12), the second-metal layer (2) is formed with a second step portion (26) matching the first step portion (11a), and the second step portion (26) is configured to be welded to a current collector (120).

2. The conductive structure (10) according to claim 1, **characterized in that** the second step portion (26) comprises a first step surface (261) and a second step surface (262) connected to each other, a width of the first step surface (261) is greater than or equal to 0.5 mm in a radial direction of the first-metal post (1), and a height of the second step surface (262) is greater than or equal to 0.4 mm in an axial direction of the first-metal post (1).

3. The conductive structure (10) according to claim 1 or 2, **characterized in that** the first-metal post (1) radially protrudes to form a boss (13), a radial dimension of the boss (13) is greater than a radial dimension of the first step portion (11a), and the second-metal layer (2) extends onto the boss (13).

4. The conductive structure (10) according to claim 3, **characterized in that** an end portion (20) of the second-metal layer (2) extends to a side of the boss (13) close to the first end (11) and is embedded in the boss (13).

5. The conductive structure (10) according to claim 3, **characterized in that** an end portion (20) of the second-metal layer (2) extends to a side of the boss (13) away from the first end (11).

6. The conductive structure (10) according to claim 3, **characterized in that** the conductive structure (10) is a pole (101) and a terminal pressing block (102) integrally arranged, and the boss (13) is the terminal pressing block (102).

7. The conductive structure (10) according to any one of claims 1 to 6, **characterized in that** the first step portion (11a) is a sinking table located at an edge of an end surface of the first end (11), the second-metal layer (2) further comprises a first section (21) and a second section (22), the first section (21) corresponds to the end surface of the first end (11), the second section (22) corresponds to a side surface of the first-metal post (1), and the second step portion (26) is connected between the first section (21) and the second section (22).

8. The conductive structure (10) according to claim 7, **characterized in that** the end surface of the first end (11) is partially recessed inward to form a groove (11b), the first section (21) comprises a first sub-section (211), a second sub-section (212), and a third sub-section (213) connected in sequence, the first sub-section (211) is located outside the groove (11b), the second sub-section (212) is located on a side wall of the groove (11b), and the third sub-section (213) is located on a bottom wall of the groove (11b).

9. The conductive structure (10) according to claim 8, **characterized in that** a vertical distance from an outer surface of the first sub-section (211) to an outer surface of the third sub-section (213) is less than or equal to 2.5 mm, and/or an average thickness of the first sub-section (211) is greater than or equal to 0.5 mm, and/or an average thickness of the second section (22) is greater than or equal to 0.5 mm.

10. The conductive structure (10) according to claim 8 or 9, **characterized in that** the second sub-section (212) extends obliquely from the first sub-section (211) to the third sub-section (213), and an inclined angle of the second sub-section (212) ranges from 15° to 60°.

11. The conductive structure (10) according to any one of claims 1 to 10, **characterized in that** a bonding interface between the second-metal layer (2) and the first-metal post (1) is a concave-convex fitting interface, and/or a diameter of the conductive structure (10) is less than or equal to 10 mm, and/or an average thickness of the second-metal layer (2) is less than or equal to 3 mm.

12. The conductive structure (10) according to claim 1, **characterized in that** an end portion (20) of the second-metal layer (2) is embedded in the first-metal post (1).

13. A cover plate assembly (100), **characterized in that** the cover plate assembly (100) comprises:
a cover plate (110);
the conductive structure (10) according to any one of claims 1 to 12, wherein the conductive structure (10) passes through the cover plate (110); and
the current collector (120) located on a side of the cover plate (110) and welded to the second step portion (26).

14. The cover plate assembly (100) according to claim 13, **characterized in that** the cover plate (110) comprises:
a cover plate body (111);
a first insulating member (112) disposed between the conductive structure (10) and the cover plate body (111); and
a second insulating member (113) disposed between the cover plate body (111) and the current collector (120); and/or
wherein the cover plate assembly (100) further comprises a sealing member (130) disposed between the cover plate (110) and the conductive structure (10).

15. A battery cell (1000), **characterized in that** the battery cell (1000) comprises:
a casing (1100) comprising an accommodating cavity (1110);
an electrode assembly (1200) disposed in the accommodating cavity (1110), wherein the electrode assembly (1200) comprises a tab (1210); and
the cover plate assembly (100) according to any one of claims 13 and 14, wherein the cover plate assembly (100) is connected to the casing (1100) and closes an opening of the accommodating cavity (1110), and the current collector (120) is connected to the tab (1210).
